# EUROPEAN PATENT APPLICATION

(11) **EP 4 425 230 A1**
(43) Date of publication of application: **04.09.2024**
(21) Application number: 23193105.6
(22) Date of filing: 24.08.2023
(51) Int. Cl.: G02B 6/38

(54) **MDC OPTICAL CONNECTOR**

(30) Priority: 01.03.2023 JP 2023030768
(71) Applicant: SANWA Technologies Co., Ltd., Tokyo 165-0034 (JP)
(72) Inventor: IIDA, Masafumi, Nakano-ku, Tokyo, 165-0034 (JP)
(74) Representative: TBK

(57) **Abstract**

The invention provides an MDC optical connector corresponding to an optical connector which can save labor for a work when detaching a small-sized MDC optical connector from an adapter with a low cost. An MDC optical connector (100) is provided with a holder (10) which houses ferrules (31, 32), and a housing (20) which retains the holder in which the ferrules are set. Further, the MDC optical connector is provided with a lever (21) in at least one surface on an outer periphery having an approximately rectangular cross section of the housing, the lever being energized in a direction of moving away from a main body of the housing around a leading end portion side of the ferrules as a fulcrum. Further, the lever is provided with a claw member (22) which conforms to a claw housing hole (41) of an adapter (40) connecting the MDC optical connector.

## Description

### TECHNICAL FIELD

The present invention relates to an MDC optical connector.

### BACKGROUND ART

An MDC connector provided by US Conec Co., Ltd. has been known as a duplex type connector which can simultaneously connect two optical connectors. In the MDC connector, a connector main body can be divided into a holder which grips and houses a ferrule, and a housing which grips the holder, and the MDC connector is adapted to switch polarity by separating and inverting both the elements. A small-sized MDC optical connector called as MDC Jr. (trade mark) has been developed as a structure in which a main body length of the MDC connector is shortened.

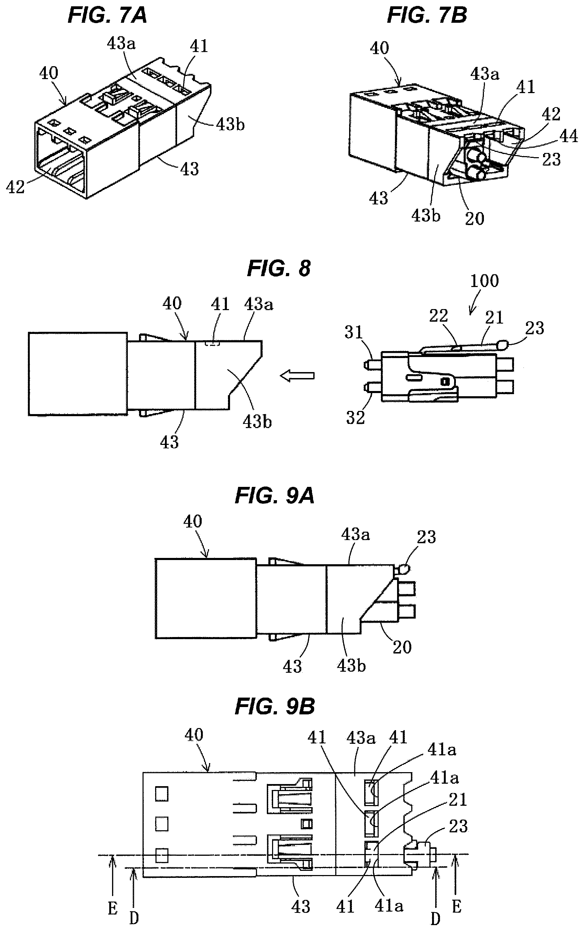

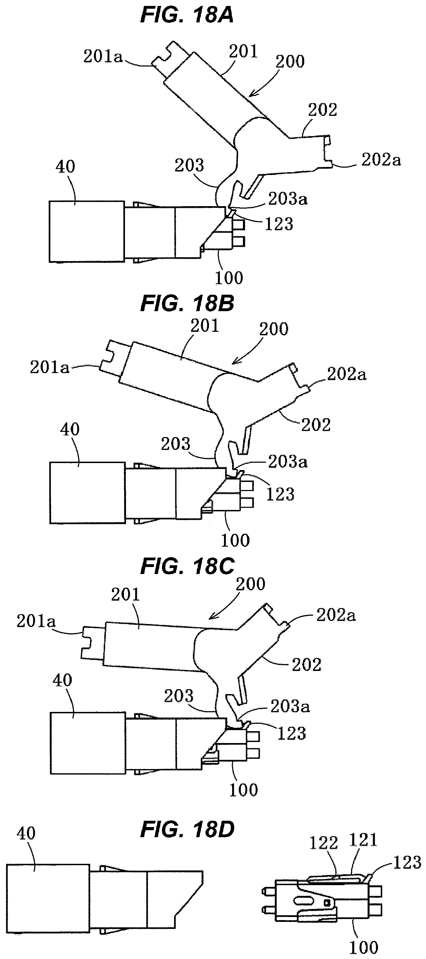

The small-sized MDC optical connector is not compatible with the MDC connector, and a dedicated adapter is provided (for example, refer to page 4 of non-patent literature "MDC4-Port Adapter MDC/MDC Jr."). Figs. 7A and 7B show an example of the dedicated adapter 40 mentioned above, in which a left end denotes an insertion port for the MDC connector, and a right end denotes an insertion port for the MDC Jr. (trade mark). Further, reference numeral 41 in Figs. 7A and 7B denotes a claw housing hole 41 which engages with a locking claw 122 of the MDC Jr. (trade mark) shown in Fig. 18D. More specifically, when the MDC Jr. (trade mark) 100 is inserted into the adapter 40, the locking claw 122 provided in a protruding manner in both sides of an arch member 121 disposed on a top plate of the MDC Jr. (trade mark) 100 is adapted to engage with the claw housing hole 41 to lock. Hereinafter, MDC Jr. (trade mark) is also called as MDC optical connector, and is denoted by reference numeral 100.

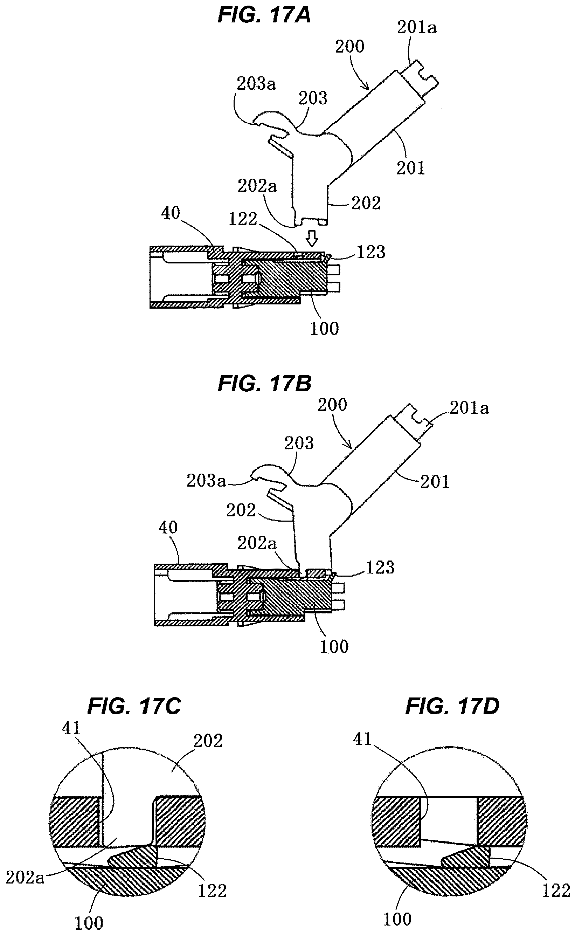

Accordingly, in the MDC optical connector 100 described in the background art mentioned above, since the lengths of the holder and the housing are shortened, the housing is almost entirely housed in the adapter 40 in a state in which the MDC optical connector 100 is regularly mounted to the adapter 40 (refer to Fig. 17A). Thus, in order to detach the MDC optical connector 100 from the adapter 40, it is necessary to use a dedicated jig 200 (refer to Figs. 17 and 18). In particular, by inserting a projection disposed in one end of the dedicated jig 200 into the claw housing hole 41 of the adapter 40, and pushing the arch member together with the locking claw 122 downward, the engagement between the locking claw 122 and the claw housing hole 41 is removed, and the MDC optical connector 100 can be drawn.

In this case, a description will be given in detail of a structure of the dedicated jig 200. As shown in Figs. 17 and 18, the dedicated jig 200 has an arm depressing member 202 which is provided in a leading end side of a grip member 201 including a pushing portion 201a of the MDC optical connector 100 in a rear end, with a projection 202a pressing the locking claw 122 provided in a front end in a protruding manner in both sides of the arch member 121 of the MDC optical connector 100, and an optical connector drawing member 203 which is provided in a front end with a claw portion 203a locking to a locking bar 123 provided in a protruding manner in a rear side of the arch member 121 of the MDC optical connector 100. Thus, the dedicated jig 200 is constructed as an approximately Y-shaped form in a side view by the grip member 201, the arm depressing member 202 and the optical connector drawing member 203. In this connection, the MDC optical connector 100 can be pushed manually. Therefore, the pushing portion 201a of the MDC optical connector 100 in the rear end of the grip member 201 is not necessarily provided.

However, this kind of conventional MDC optical connector has the following various problems.
(A) The locking claw 122 of the MDC optical connector 100 engaging with and disengaging from the claw housing hole 41 of the adapter 40 is integrally constructed with the arch member 121 which is fixed in both ends to the top plate of the MDC optical connector 100. Therefore, the locking claw 122 can not be bent downward even by pressing the arch member 121 from the above with a weak force of finger, and the locking claw 122 can not be released from the claw housing hole 41 of the adapter 40.
(B) Therefore, the MDC optical connector 100 can not be drawn from the adapter 40 without using the dedicated jig 200 shown in Figs. 17 and 18. Further, the dedicated jig 200 has a complicated structure in which the grip member 201, the arm depressing member 202 and the optical connector drawing member 203 are provided in three directions, and is accordingly expensive. Further, it is necessary to employ a troublesome step of using the arm depressing member 202, thereafter turning the dedicated jig 200 and using the optical connector member 203.

More specifically, a description will be given in detail of the conventional structure and steps. In the conventional structure, the MDC optical connector 100 can not be disconnected only by disconnecting the MDC optical connector 100 in a state in which the MDC optical connector (not Jr) is inserted into an opposite side, when detaching the MDC optical connector 100. When the projection 202a in the lower end of the arm depressing member 202 of the dedicated jig 200 is inserted into the claw housing hole 41 disposed in the top plate of the adapter 40 in a state in which the MDC optical connector 100 is inserted into the opposite side, the MDC optical connector is a little disconnected by the pushing force of the MDC optical connector in the opposite side and the arch member 121 is again lifted up. At this time, as shown in Fig. 17E, the locking claw 122 slightly comes off rearward from the original position.

Since the locking claw 122 keeps a state in which the locking claw 122 is locked to the inner surface of the top plate at the rear of the claw housing hole 41 as mentioned above, the dedicated jig 200 is thereafter detached from the adapter 40 temporarily, and the claw portion 203 of the optical connector drawing member 203 in the dedicated jig 200 is pulled rearward while being locked to the locking bar 123 of the MDC optical connector 150. As a result, the present MDC optical connector 100 is adapted to be completely drawn rearward from the adapter 40, as shown in Fig. 18D.

### CITATION LIST

### NON-PATENT LITERATURE

Non-Patent Literature 1: US Conec, "MDC CONNECTOR SOLUTIONS", "online", "Searched on January 22, 2023", Internet URL: https://www.usconec.com/media/1402/mdc-brochure.pdf

### SUMMARY OF INVENTION

### TECHNICAL PROBLEM

Accordingly, the present invention is made by taking into consideration the conventionally existing defect as mentioned above, and an object of the present invention is to provide an MDC optical connector which can manually perform the work when the small-sized MDC optical connector mentioned above is detached from the adapter.

### SOLUTION TO PROBLEM

In order to solve the problem mentioned above, according to the present invention, there is provided an MDC (mini duplex connector) optical connector including a holder which houses a ferrule, and a housing which retains the holder in which the ferrule is set, wherein a lever is disposed in at least one surface on an outer periphery having an approximately rectangular cross section of the housing, the lever being energized in a direction of moving away from a main body of the housing around a leading end portion side of the ferrule as a fulcrum, and the lever is provided with a claw member which conforms to a claw housing hole of an adapter connecting the MDC optical connector.

A concave portion for securing a pushing amount of the lever is disposed in a surface opposite to the lever in the housing.

A head portion exposing so as to make the lever operable in a state in which the MDC optical connector is inserted into the adapter is disposed at the end of the lever.

The housing is constructed by an elastic member which is capable of energizing the lever in a direction of moving away from the main body of the housing.

The claw housing hole of the adapter has at least in a rear inner surface a vertical wall surface which inhibits the lever from moving rearward.

A fitting groove of the lever is formed in a rear surface of an upper wall of the adapter, the fitting groove being slightly wider than a width of the lever and having approximately the same depth as a thickness of the lever and the claw member.

The fitting groove is formed across the front and rear direction below the claw housing hole in such a manner as to communicate on a straight line with a vertical wall surface at the rear of the claw housing hole of the claw member and a front wall surface opposite to the vertical wall surface.

### EFFECT OF INVENTION

More specifically, the present invention is the MDC (mini duplex connector) optical connector including the holder which houses the ferrule, and the housing which retains the holder in which the ferrule is set, wherein the lever is disposed in at least one surface on the outer periphery having the approximately rectangular cross section of the housing, the lever being energized in a direction of moving away from the main body of the housing around the leading end portion side of the ferrule as the fulcrum, and the lever is provided with the claw member which conform to the claw housing hole of the adapter connecting the MDC optical connector. Therefore, it is possible to perform an attaching and detaching work between the MDC optical connector and the adapter by a manual operation. Accordingly, owing to unnecessity of a dedicated jig and simplification of a working step as well as an easy handling operation and an extremely excellent convenience, a cost saving with a low cost can be achieved. Thus, an optimum structure for the MDC optical connector can be provided.

The concave portion for securing the pushing amount of the lever is disposed in the surface opposite to the lever in the housing. Therefore, it is possible to set an upper position of the lever lower, and it is possible to stably retain without being out of position right and left when pushing the lever.

The head portion exposing so as to make the lever operable in a state in which the MDC optical connector is inserted into the adapter is disposed at the end of the lever. Therefore, it is easy to manually perform the attaching and detaching work between the MDC optical connector and the adapter.

The housing is constructed by the elastic member which is capable of energizing the lever in the direction of moving away from the main body of the housing. Therefore, the structure can be made simpler because any other member for energizing the lever is not necessarily provided, and a low cost construction can be achieved.

The claw housing hole of the adapter has at least in the rear inner surface the vertical wall surface which inhibits the lever from moving rearward. Therefore, in a state in which the claw member of the lever is locked within the claw housing hole of the adapter, the drawing operation of the lever can be securely inhibited even by pulling the lever strongly to the rear side.

The fitting groove of the lever is formed in the rear surface of the upper wall of the adapter, the fitting groove being slightly wider than the width of the lever and having approximately the same depth as the thickness of the lever and the claw member. Therefore, it is possible to smoothly and securely push and draw the lever without being out of position right and left.

The fitting groove is formed across the front and rear direction below the claw housing hole in such a manner as to communicate on a straight line with the vertical wall surface at the rear of the claw housing hole of the claw member and the front wall surface opposite to the vertical wall surface. Therefore, the lever is fitted to the fitting groove of the adapter in a state in which the lever is extended to the front side of the claw housing hole. Thus, the lever can be securely fitted below the claw housing hole even in the case of the claw member provided in a protruding manner in both sides approximately in the middle of the lever.

### BRIEF DESCRIPTION OF DRAWINGS

Figs. 1A and 1B show an MDC optical connector indicating illustrating a best mode for carrying out the present invention, in which Fig. 1A is a perspective view as seen from a front side, and Fig. 1B is a perspective view as seen from a rear side.
Fig. 2 is an exploded view for describing a construction and an assembling method of the MDC optical connector.
Figs. 3A to 3F show a holder of the MDC optical connector, in which Fig. 3A is a front elevational view, Fig. 3B is a plan view, Fig. 3C is a side elevational view, Fig. 3D is a bottom elevational view, Fig. 3E is a back elevational view, and Fig. 3F is a cross sectional view along a line A-A in Fig. 3A.
Figs. 4A to 4F show a housing of the MDC optical connector, in which Fig. 4A is a front elevational view, Fig. 4B is a plan view, Fig. 4C is a side elevational view, Fig. 4D is a bottom elevational view, Fig. 4E is a back elevational view, and Fig. 4 is a cross sectional view along a line B-B in Fig. 4A.
Figs 5A to 5E show the MDC optical connector in an assembled state, in which Fig. 5A is a front elevational view, Fig. 5B is a plan view, Fig. 5C is a side elevational view, Fig. 5D is a bottom elevational view, and Fig. 5E is a back elevational view.
Fig. 6 is an enlarged cross sectional view along a line C-C in Fig. 5B.
Figs. 7A and 7B show an adapter, in which Fig. 7A is a perspective view as seen from a front side, and Fig. 7B shows a state in which the MDC optical connector is inserted and attached to the adapter, and is a perspective view as seen from a rear side.
Fig. 8 is a side elevational view showing a state before the MDC optical connector is inserted and attached to the adapter.
Figs. 9A and 9B show a state in which the MDC optical connector is inserted and attached to the adapter, in which Fig. 9A is a side elevational view, and Fig 9B is a plan view.
Figs. 10A to 10D show a process of locking a lever of the MDC optical connector to a claw housing hole of the adapter, in which Fig. 10A is an explanatory view before a claw member is locked as seen from a rear surface side of an upper wall of the adapter, Fig. 10B is an explanatory view after the claw member is locked, Fig. 10C is a cross sectional view along a line F-F in Fig. 10A, and Fig. 10D is a cross sectional view along a line G-G in Fig. 10B.
Figs. 11A and 11B show an example of using in a state in which the lever of the MDC optical connector is locked to the claw housing hole of the adapter, in which Fig. 11A is an enlarged cross sectional view along a line D-D in Fig. 9B, and Fig. 11B is an enlarged cross sectional view along a line E-E in Fig. 9B.
Figs. 12A and 12B show an example of using in a state in which a head portion of the lever of the MDC optical connector is depressed and releases the lock, in which each of Figs. 12A and 12B is an enlarged cross sectional view corresponding to Figs. 11A and 11B.
Figs. 13A and 13B show an example of using in a state in which the head portion of the lever is slightly pulled out after releasing the lock of the lever of the MDC optical connector, in which each of Figs. 13A and 13B is an enlarged cross sectional view corresponding to Figs. 12A and 12B.
Figs. 14A to 14C show cross sectional views of Figs. 11A, 12A and 13A, in which Fig. 14A is a cross sectional view along a line H-H in Fig. 11A, Fig. 14B is a cross sectional view along a line I-I in Fig. 12A, and Fig. 14C is a cross sectional view along a line J-J in Fig. 13A.
Figs. 15A to 15C show the claw housing hole of the adapter and the claw member of the lever, in which Fig. 15A is a partly enlarged cross sectional view showing a state in which the claw member is locked to the claw housing hole, Fig. 15B is a partly enlarged cross sectional view showing a state in which the lock is released, and Fig. 15C is a partly enlarged cross sectional view showing a state in which the lever is slightly drawn after releasing the lock.
Figs. 16A to 16C show the claw housing hole of the adapter and the claw member of the lever, in which Fig. 16A is a cross sectional view along a line X-X in Fig. 15A, Fig. 16B is a cross sectional view along a line Y-Y in Fig. 15B, and Fig. 16C is a cross sectional view along a line Z-Z in Fig. 15C.
Figs. 17A to 17D are views for explaining a work for detaching the MDC optical connector described in the background art from the adapter, in which Fig. 17A is an explanatory view showing a state before pressing a locking claw of an MDC optical connector by the use of a dedicated jig, Fig. 17B is an entire explanatory view showing a state in which the locking claw is pressed by the use of the dedicated jig, Fig. 17C is a partly enlarged view showing a state in which the locking claw is pressed by the use of the dedicated jig, and Fig. 17D is a partly enlarged view showing a state in which the pressing of the locking claw is released by detaching the dedicated jig.
Figs. 18A to 18D are views for explaining a work for taking out the MDC optical connector described in the background art from the adapter, in which Fig. 18A is an explanatory view showing a state before the MDC optical connector is taken out by the use of the dedicated jig, Figs. 18B and 18C are explanatory views showing the process of taking out the MDC optical connector, and Fig. 18D is an explanatory view showing a state in which the MDC optical connector is drawn out of the adapter.

### DESCRIPTION OF EMBODIMENTS

A description will be in detail given below of a best mode for carrying out the present invention with reference to the accompanying drawings.

First of all, a description will be given of a basic configuration of an MDC optical connector 100.

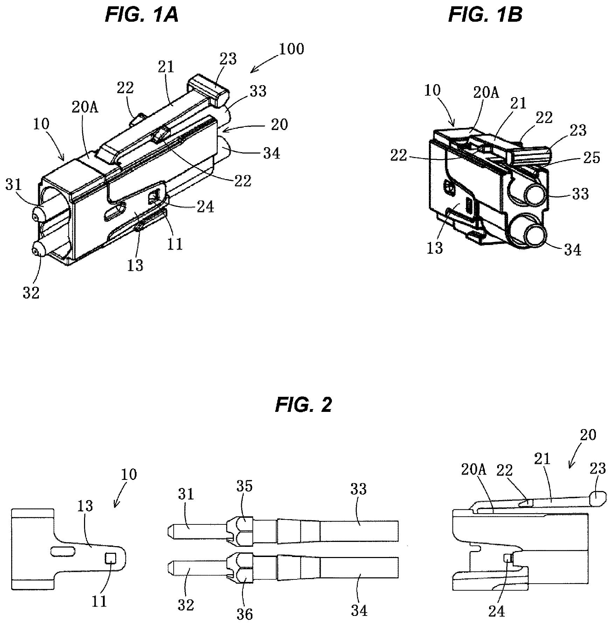

As shown in Fig. 2, the MDC optical connector 100 is generally constructed by including a holder 10 which houses a pair of ferrules 31 and 32, and a housing 20 which brings the holder 10 and the pair of ferrules 31 and 32 into pressure contact and retains them, and has an approximately rectangular cross sectional shape.

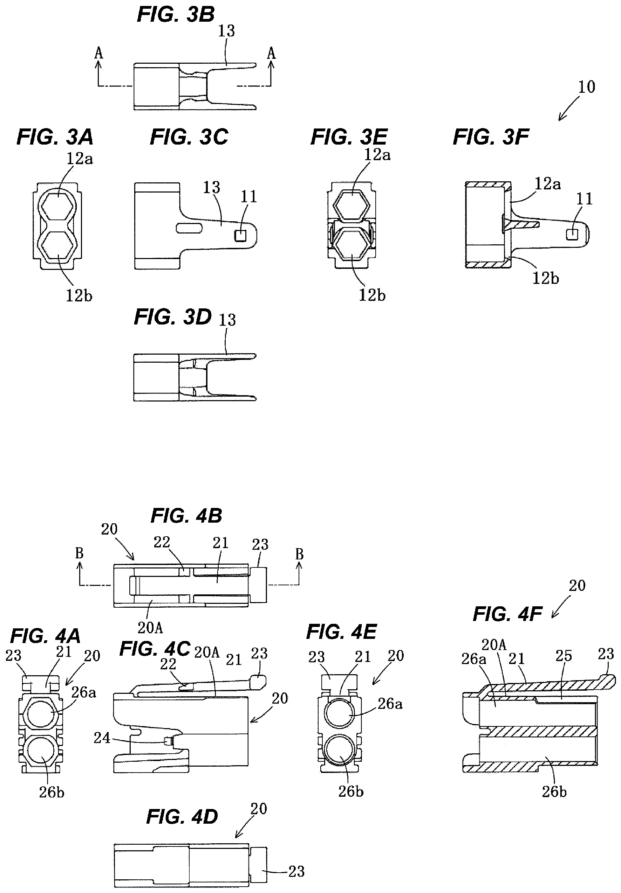

As shown in Fig. 3, holes 12a and 12b housing the pair of ferrules 31 and 32 are provided in upper and lower sides in the holder 10. Taper portions are formed in these holes 12a and 12b, the taper portions come into contact with support brackets 35 and 36 supporting leading end portions of the pair of ferrules 31 and 32, and the pair of ferrules 31 and 32 can be supported respectively by the support brackets 35 and 36 in a state in which the ferrules 31 and 32 are oriented to a direction of an adapter 40 (refer to Figs. 7 and 8).

Further, the housing 20 is provided with holes 26a and 26b which house portions of tubes 33 and 34 of an optical cable, as shown in Figs. 2 and 4. Diameters of the holes 26a and 26b in the holder 10 side are smaller than diameters of the support brackets 35 and 36 which support the leading end portions of the pair of ferrules 31 and 32. The housing 20 is set to the holder 10, and each of the pair of ferrules 31 and 32 can be accordingly supported in a direction of the adapter 40.

The MDC optical connector 100 constructed as mentioned above fixes a pair of ferrules 31 and 32 by the use of the support brackets 35 and 36 after passing the tubes 33 and 34 from a rear side of the housing 20, as shown in Fig. 2. Thereafter, both the ferrules 31 and 32 are respectively inserted into the holes 12a and 12b of the holder 10 and are seated on the taper portions. Thereafter, by moving the housing 20 to the holder 10 side, a hole 11 disposed in an arm portion of the holder 10 engages with a projection 24 disposed in the housing 20 side, thereby locking.

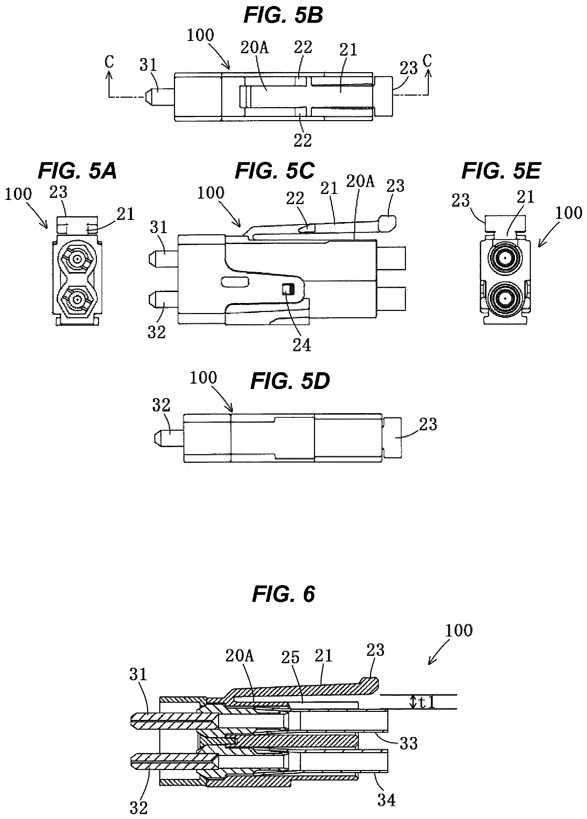

In the meantime, as shown in Figs. 1A and 1B, Figs. 2, 5 and 8, a lever 21 is integrally connected to a top plate 20A of the housing 20, and the lever 21 is energized in a direction of moving away from a main body of the housing 20 around the leading end portion side of the pair of ferrules 31 and 32. Further, two claw members 22 are provided in a protruding manner with a space conforming to the claw housing hole 41 of the adapter 40 in both sides of a middle position of the lever 21.

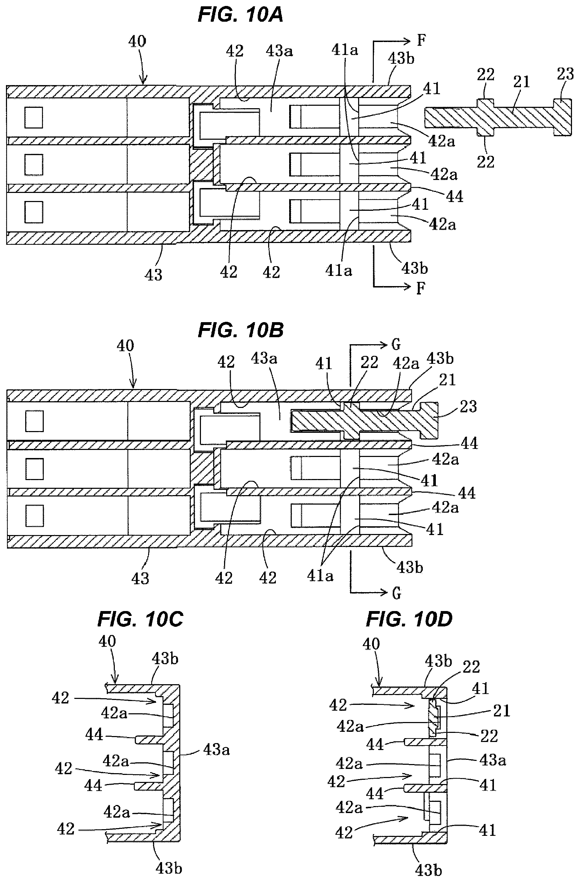

Further, a head portion 23 for gripping is disposed at the end of the lever 21. The head portion 23 is slightly exposed rearward from the adapter even in a state in which the MDC optical connector 100 is locked to the adapter 40, as shown in Figs. 9A and 9B, Fig. 10B and Fig. 11. Further, a concave portion 25 for securing a pushing amount t1 (depressible width) of the lever is disposed in a surface opposite to the lever 21 in the top plate 20A of the housing 20 (refer to Figs. 4 and 6, and Fig. 11B). A depth of the concave portion 25 defines the pushing amount t1 (depressible width) of the lever 21.

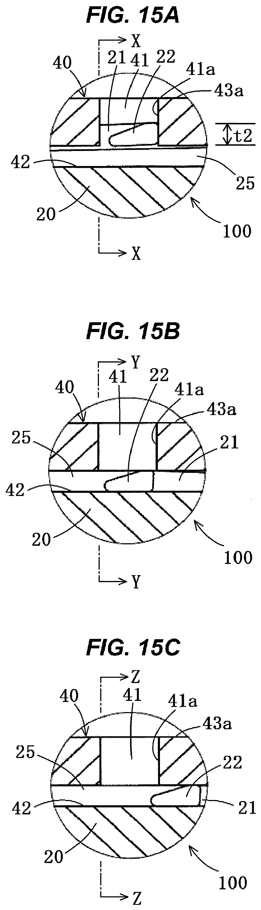

In particular, the pushing amount t1 (depressible width) of the lever 21 is set to be equal to or more than a height t2 of a surface coming into contact with the claw housing hole 41 of the claw member 22 (refer to Fig. 15A). Therefore, when the user sufficiently depresses the lever 21 by the use of the head portion 23, the claw member 22 comes off from the claw housing hole 41 of the adapter 40, thereby allowing the MDC optical connector 100 to be drawn out of the adapter 40. Therefore, the MDC optical connector 100 according to the present embodiment does not require the dedicated jig 200 shown in Figs. 17 and 18 when being detached from the adapter 40 in comparison with the MDC optical connector 100 described in the background art.

By opening the arm portion 13 of the holder 10 right and left and releasing the engagement between the hole 11 of the holder 10 and the projection 24 of the housing 20, the holder 10 and the housing 20 can be separated. Further, it is possible to switch polarity by remounting the pair of ferrules 31 and 32. Further, the holder 10 and the housing 20 are preferably constructed by using a resin molded product. However, in a more desirable mode, it is preferable to select a material having an elastic property which can energize the lever 21 mentioned later in a direction of moving away from the main body of the housing 20, for the resin.

Subsequently, a description will be given in detail of a structure of the adapter 40 conforming to the MDC optical connector 100 according to the embodiment mentioned above.

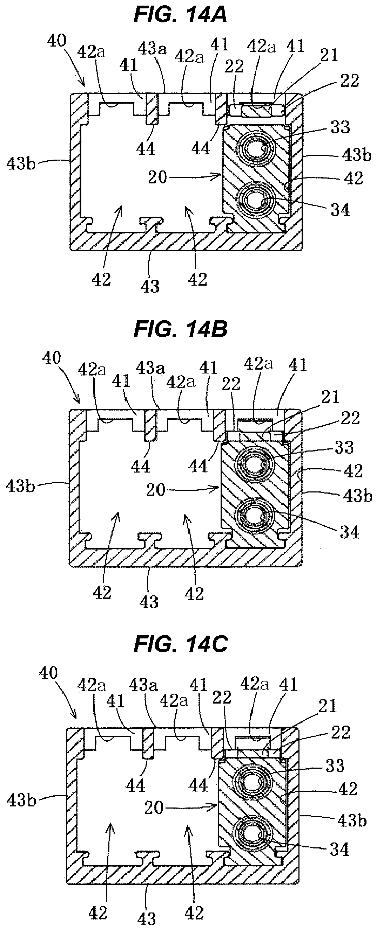

As shown in Figs. 7A and 7B, Fig. 8, Figs. 9A and 9B, Figs. 10A, 10B and 10C, Figs. 11A and 11B, and Figs. 14A, 14B and 14C, the adapter 40 is formed by an adapter main body 43 which has insertion holes 42 for the MDC optical connector 100 in both front and rear ends and is formed into a rectangular cross sectional shape, a plurality of (three in the present embodiment) wide rectangular claw housing holes 41 are open to an upper wall 43a of the adapter main body 43 at regular intervals, the claw members 22 of the lever 21 engage with the claw housing holes 41, two partition wall guide plates 44 are vertically provided in a lower surface of the upper wall 43a so as to be positioned between three claw housing holes 41 mentioned above, and fitting grooves 42a to the lever 21 are formed at the center of two partition wall guide plates 44 in the rear surface of the upper wall 43a.

The claw housing hole 41 has a vertical locking surface 41a at least in a rear inner surface thereof, the vertical locking surface 41a securely and firmly inhibiting the lever 21 from moving rearward in a state in which a rear end of the claw member 22 of the lever 21 is retained.

The fitting groove 42a is communicated with an upper side of an insertion hole 42 to the MDC optical connector 100, is slightly wider than a width of the lever 21, and has approximately the same depth as a thickness of the lever 21 and the claw member 22.

Further, the fitting groove 42a is formed across the front and rear direction of the claw housing hole 41 in such a manner as to communicate on a straight line with a rear side (vertical locking surface 41a) of the claw housing hole 41 and a front wall surface opposite thereto.

In the meantime, three claw housing holes 41 mentioned above are open at regular intervals on an upper wall 43a between both side walls 43b of the adapter main body 43 and two partition wall guide plates 44, so that three insertion holes 42 to the MDC optical connector 100 are formed in parallel in the adapter 40 according to the present embodiment. As mentioned above, the adapter 40 according to the present embodiment is formed so that three MDC optical connectors 100 can be inserted and connected, however, the number of the insertion holes 42 is not limited to this, but may be of course set to a single number or a plural number.

A description will be given below of an example of using the MDC optical connector 100 according to the present embodiment.

First of all, a description will be given of a procedure of inserting and attaching the MDC optical connector 100 according to the present embodiment to the adapter 40.

When the MDC optical connector 100 according to the present embodiment is inserted into the insertion hole 42 of the adapter 40, the lever 21 is pushed by a lower surface of the upper wall 43a in an inner side of the adapter 40 and moves down. When the MDC optical connector 100 is further pushed, the lever 21 is fitted to the fitting groove 42a which is formed in the rear surface of the upper wall 43a of the adapter 40, and two claw members 22 in both sides of the lever 21 are fitted into lower side of the claw housing holes 41 of the adapter 40. Thus, the MDC optical connector 100 is locked to the adapter 40 (refer to Figs. 9A and 9B to Figs. 10A, 10B and 10C, and Figs. 11A and 11B).

Subsequently, a description will be given of a procedure of detaching the MDC optical connector 100 according to the present embodiment from the adapter 40.

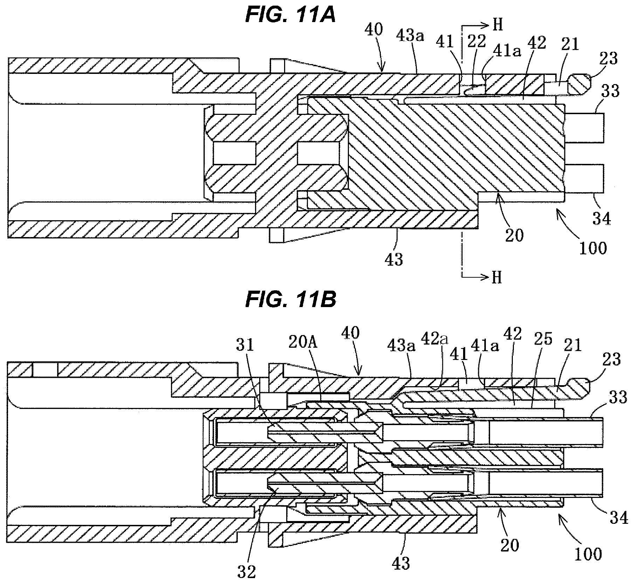

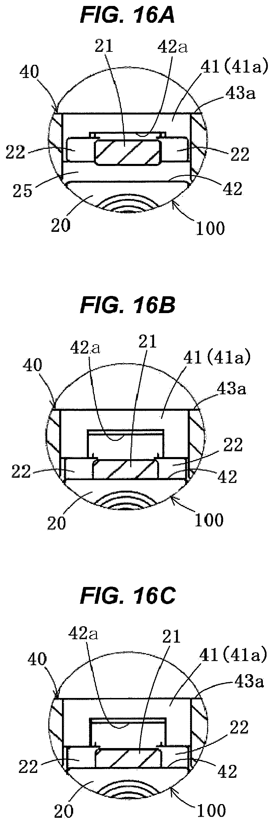

Figs. 11A and 11B, Fig. 14A, Fig. 15A and Fig. 16A show a state in which the MDC optical connector 100 is locked to the adapter 40.

More specifically, the claw members 22 provided in a protruding manner in both sides of the lever 21 in the MDC optical connector 100 are locked to the vertical locking surfaces 41a at the rear of the claw housing holes 41 in the adapter 40. As a result, the MDC optical connector 100 can not be drawn out of the adapter 40 even by pinching the head portion 23 provided at the end of the lever 21 and strongly pulling the head portion 23 rearward.

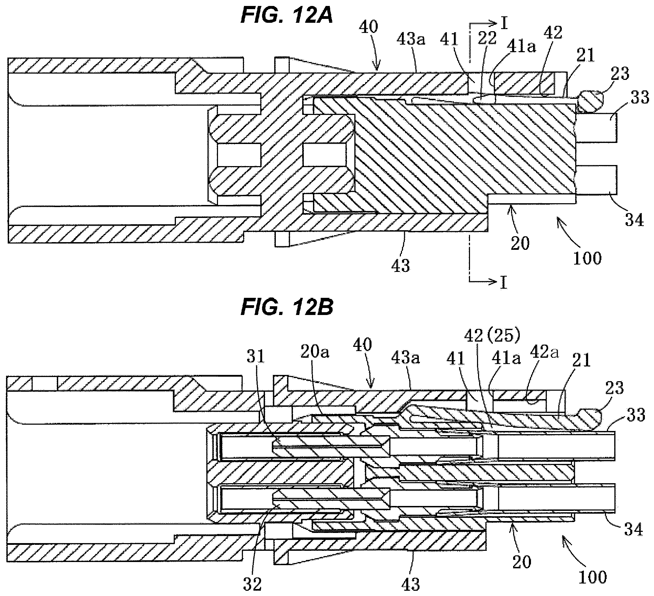

Figs. 12A and 12B, Fig. 15B and Fig. 16B show a state in which the locking of the MDC optical connector 100 is released from the adapter 40.

More specifically, by depressing the head portion 23 at the end of the lever 21 downward while gripping with fingers in the locked state of Figs. 11A and 11B, Fig. 15A and Fig. 16A, the locking of the claw members 22 housed in the claw housing hole 41 of the adapter 40 comes off and the lever 21 simultaneously comes off from the fitting grooves 42a formed on the rear surface of the upper wall 43a of the adapter 40.

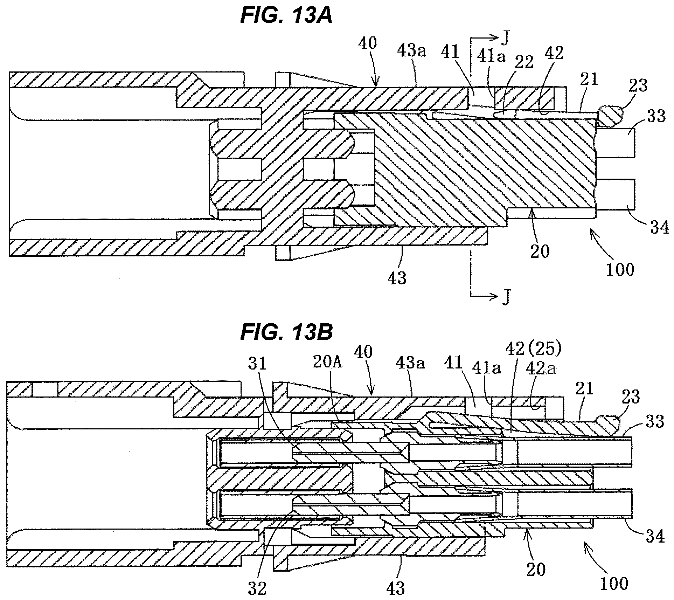

Figs. 13A and 13B, Fig. 15C and Fig. 16C show a state in which the MDC optical connector 100 is slightly drawn out of the adapter 40.

More specifically, by pulling the head portion 23 at the end of the lever 21 rearward while gripping in the lock released state in Figs. 12A and 12B, Fig. 15B and Fig. 16B, the MDC optical connector 100 is slightly drawn out of the adapter 40.

At this time, the claw housing hole 41 of the lever 21 is pressed by a rear surface (fitting groove 42a) of the upper wall 43a in the adapter 40, thereby further pulling the head portion 23 at the end of the lever 21. As a result, the MDC optical connector 100 is completely drawn out of the adapter 40 (refer to Fig. 8).

The preferred embodiment according to the present invention mentioned above does not limit the scope of the present invention. A person skilled in the art can modify and replace the embodiment mentioned above within the scope of the present invention, and can construct embodiments to which various alternatives are applied. For example, in the embodiment mentioned above, the description is given on the assumption that the housing 20 is constructed by a synthetic resin as a whole, and the lever 21 is adapted to be energized in a direction of moving away from the main body of the housing 20. However, for example, it is possible to employ a configuration that a leaf spring is arranged between the housing 20 and the lever 21, and energizes the lever 21 in the direction of moving away from the main body of the housing 20.

Further, in the embodiment mentioned above, the description is given on the assumption that the lever 21 is disposed in the top plate 20A of the housing 20. However, the lever 21 may be disposed in a bottom surface of the housing 20 as long as it does not interfere with the adapter 40. According to this configuration, it is possible to further easily switch the polarity when the holder 10 and the housing 20 are separated.

Further, in the MDC optical connector 100, the lever 21 disposed in the top plate 20A of the housing 20 is provided in a protruding manner with the claw members 22 on the same surface in both sides thereof. However, a locking member may be fixed to the upper surface of the lever 21 and may be utilized as the claw member 22 which is fitted to the claw housing hole 41 in the adapter 40. In this case, the fitting grooves 42a to the lever 21 are not necessarily required in the rear surface of the upper wall 43a in the adapter 40, but the adapter 40 may be formed flat.

### REFERENCE SIGNS LIST

10 holder
11 hole
12a, 12b hole
13 arm portion
20 housing
20A top plate
21 lever
22 claw member
23 head portion
24 projection
25 concave portion
26a, 26b hole
31, 32 ferrule
33, 34 tube
35, 36 bracket
40 adapter
41 claw housing hole
41a vertical locking surface
42 insertion hole
42a fitting groove
43 adapter main body
43a upper wall
43b side wall
44 partition wall guide plate
100 MDC optical connector
121 arch member
122 locking claw
123 locking bar
200 dedicated jig
201 grip member
201a pushing portion
202 arm depressing member
202a projection
203 optical connector drawing member
203a claw portion
t1 lever pushing amount (depressible width)
t2 claw member height

The invention provides an MDC optical connector corresponding to an optical connector which can save labor for a work when detaching a small-sized MDC optical connector from an adapter with a low cost. An MDC optical connector (100) is provided with a holder (10) which houses ferrules (31, 32), and a housing (20) which retains the holder in which the ferrules are set. Further, the MDC optical connector is provided with a lever (21) in at least one surface on an outer periphery having an approximately rectangular cross section of the housing, the lever being energized in a direction of moving away from a main body of the housing around a leading end portion side of the ferrules as a fulcrum. Further, the lever is provided with a claw member (22) which conforms to a claw housing hole (41) of an adapter (40) connecting the MDC optical connector.

## Claims

1. An MDC (mini duplex connector) optical connector comprising:
a holder for housing a ferrule; and
a housing for retaining the holder with the ferrule set,
wherein a lever is disposed in at least one surface on an outer periphery having an approximately rectangular cross section of the housing, the lever being energized in a direction of moving away from a main body of the housing around a leading end portion side of the ferrule as a fulcrum, and
wherein the lever is provided with a claw member which conforms to a claw housing hole of an adapter connecting the MDC optical connector.

2. The MDC optical connector according to claim 1, wherein a concave portion for securing a pushing amount of the lever is disposed in a surface opposite to the lever in the housing.

3. The MDC optical connector according to claim 1, wherein a head portion exposing so as to make the lever operable in a state in which the MDC optical connector is inserted into the adapter is disposed at the end of the lever.

4. The MDC optical connector according to claim 1, wherein the housing is constructed by an elastic member which is capable of energizing the lever in a direction of moving away from the main body of the housing.

5. The MDC optical connector according to claim 1, wherein the claw housing hole of the adapter has at least in a rear inner surface a vertical wall surface which inhibits the lever from moving rearward.

6. The MDC optical connector according to claim 1, wherein a fitting groove of the lever is formed in a rear surface of an upper wall of the adapter, the fitting groove being slightly wider than a width of the lever and having approximately the same depth as a thickness of the lever and the claw member.

7. The MDC optical connector according to claim 6, wherein the fitting groove is formed across the front and rear direction below the claw housing hole in such a manner as to communicate on a straight line with a vertical wall surface at the rear of the claw housing hole of the claw member and a front wall surface opposite to the vertical wall surface.
